# EUROPÄISCHE PATENTSCHRIFT

(11) **EP 0 902 066 B1**
(45) Veröffentlichungstag und Bekanntmachung des Hinweises auf die Patenterteilung: **07.05.2003**
(21) Anmeldenummer: 98116836.2
(22) Anmeldetag: 07.09.1998
(51) Int. Cl.: C09D 167/07, C08J 7/04, C08F 290/06, C08F 299/04, C08G 63/47

(54) **Härtbare Beschichtungen aus oligomeren Kondensationsprodukten**
Curable coating compositions from oligomeric condensation products
Compositions de revêtement durcissables à partir de produits de condensation oligomères

(30) Priorität: 10.09.1997 DE 19739640
(43) Veröffentlichungstag der Anmeldung: 17.03.1999
(73) Patentinhaber: BAYER AG, 51368 Leverkusen (DE)
(72) Erfinder: Podszun, Wolfgang, Dr., 51061 Köln (DE); Heiliger, Ludger, Dr., 51373 Leverkusen (DE); Mager, Michael, Dr., 51375 Leverkusen (DE)

(56) Entgegenhaltungen:
- DE-A- 4 040 290
- DE-A- 4 440 819
- DATABASE WPI Week 7409 Derwent Publications Ltd., London, GB; AN 74-16281V XP002088722 & JP 48 096515 A (TOA GOSEI CHEM IND LTD) , 10. Dezember 1973

## Beschreibung

Die Erfindung betrifft härtbare Beschichtungen enthaltend oligomere Kondensationsprodukte aus aromatischen Tri- oder Tetracarbonsäuren und Dihydroxyalkyl(meth)-acrylaten.

Für die Beschichtung von Kunststoffoberflächen werden zahlreiche Beschichtungsmaterialien angewendet. In vielen Fällen führt die Beschichtung mit Acrylaten bzw. Methacrylaten, die thermisch oder fotochemisch gehärtet werden können, zu guten Ergebnissen. Die Vorteile der Acryltatbeschichtungen sind deren hohe Transparenz, gute Witterungsstabilität und gute mechanische Festigkeit. UV-härtbare Beschichtungen für Polycarbonatoberflächen werden beispielsweise in den Patentschriften US-A 3 968 305 und WO 80/00968 beschrieben. Die EP-A 0 274 596 offenbart Acrylatbeschichtungen für Kunststoffoberflächen, die neben üblichen Acrylatmonomeren UV-Adsorber für den UV-Schutz enthalten.

EP-A 464 485 beschreibt UV härtbare Beschichtungen auf Basis von Acrylaten.

Ein Nachteil der bekannten Acrylatbeschichtungen ist ihre nicht ausreichende Haftfestigkeit auf Kunststoffoberflächen.

Die Aufgabe der vorliegenden Erfindung ist daher die Bereitstellung einer durch Strahlung oder Wärme aushärtbaren Beschichtung für Kunststoffoberflächen, die bei guten optischen und mechanischen Eigenschaften und hoher Witterungsstabilität zusätzlich eine verbesserte Haftung ermöglicht.

Es wurde nun gefunden, daß sich mit Hilfe oligomerer Kondensationsprodukte aus aromatischen Tri- oder Tetracarbonsäuren und mehrwertigen Hydroxyalkyl(meth)-acrylaten, härtbare Beschichtungen erhalten werden, die eine hervorragende Haftung auf Kunststoffoberflächen und darüber hinaus eine deutlich verbesserte Polymerisationsfähigkeit aufweisen.

Mit oligomeren Kondensationsprodukten aus aromatischen Tri- oder Tetracarbonsäuren und mehrwertigen Hydroxyalkyl(meth)acrylaten sind solche gemeint, die sich aus folgenden Monomeren der Formel (I) und (II) unter Kondensationsreaktionen bzw. Additionsreaktion ableiten lassen.

Die Monomeren entsprechen der Formel (I) 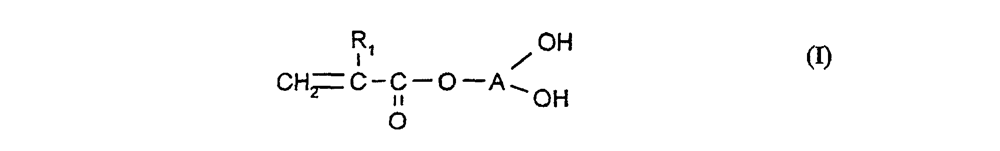 in der
- R₁: Wasserstoff oder Methyl bedeutet,
- A: ein dreibindiger aliphatischer Rest mit 3 bis 15 C-Atomen, der (zusätzliche) OH - Gruppen und bis zu 5 Etherbrücken enthalten kann, bedeutet,
und der Formel (II) 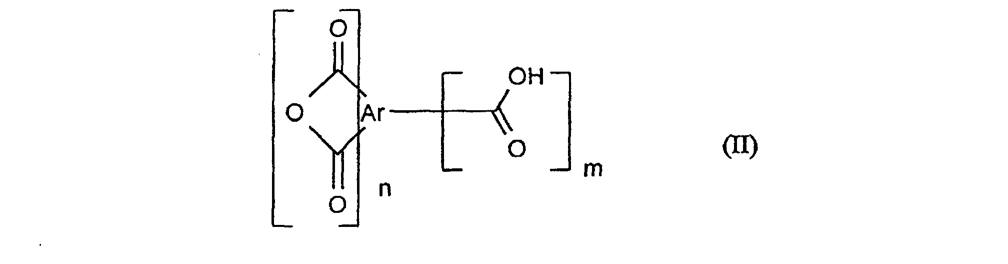 in der
- Ar: für einen Benzolring oder einen Naphthalinring steht,
- n: eine ganze Zahl 1 oder 2 bedeutet,
- m: 1 oder 2 bedeutet.

Der aliphatische Rest A in Formel (I) kann linear, verzweigt oder cyclisch sein. Bevorzugt werden lineare oder verzweigte Reste.

Geeignete aliphatische Reste A sind z. B. die folgenden:

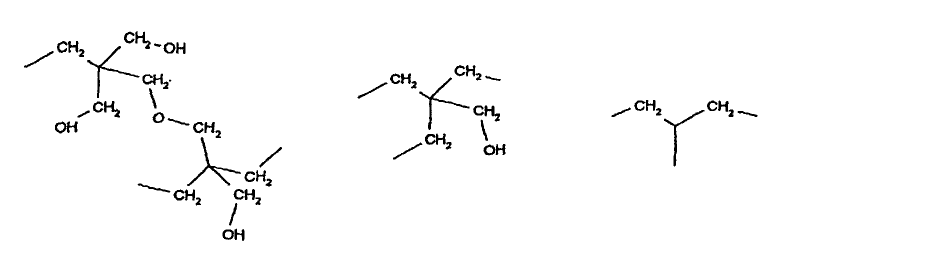

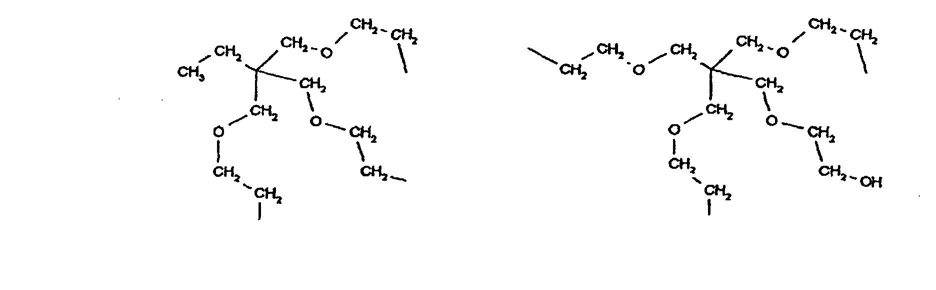

Im einzelnen seien beispielsweise die folgenden Monomere der Formel (I) genannt:

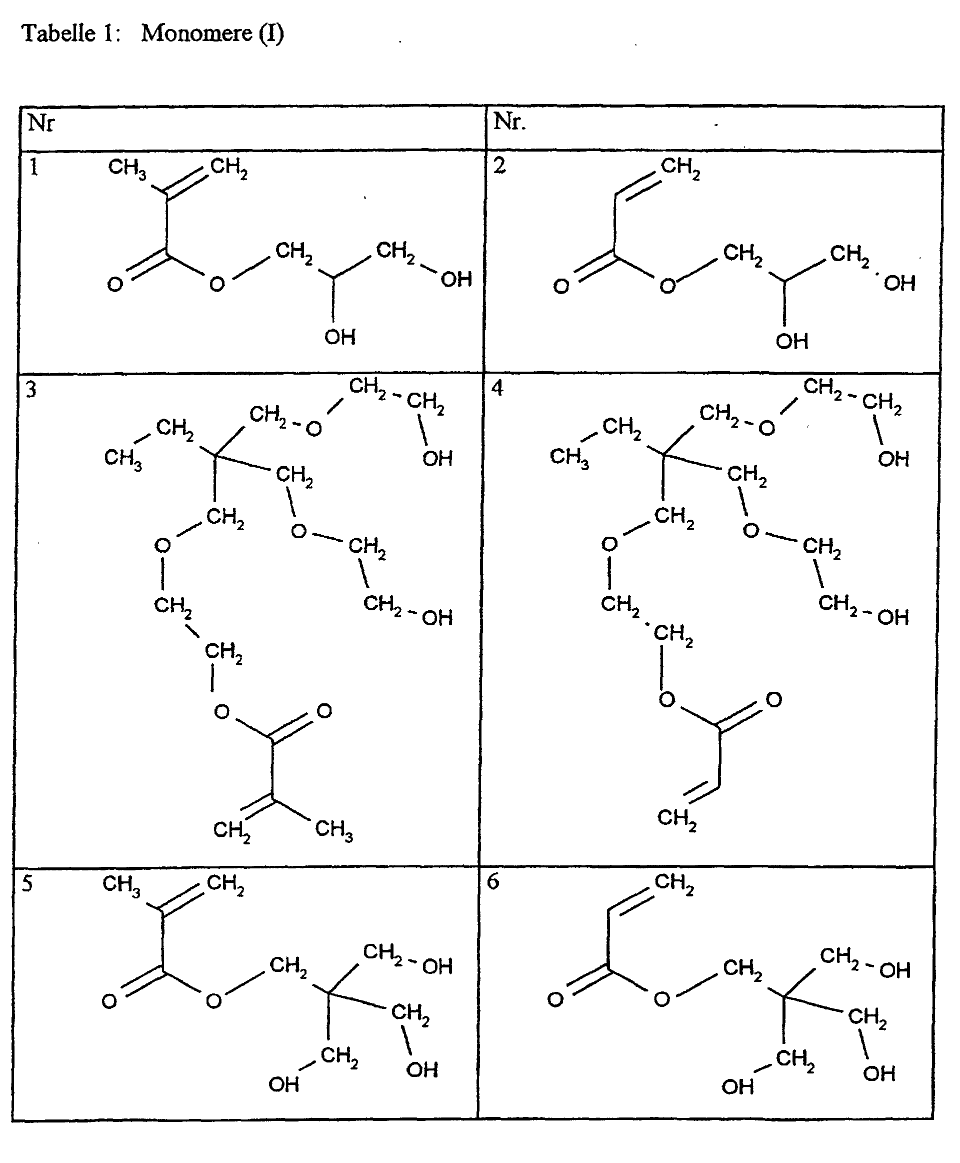

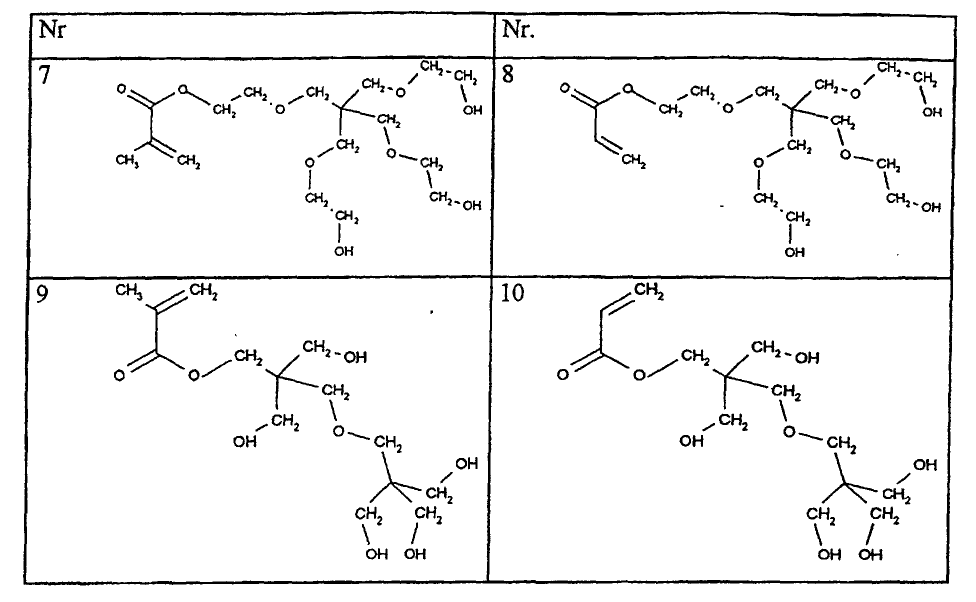

Als Monmomere der Formel (II) seien beispielsweise die Monoanhydride und Dianhydride von aromatischen Tri- und Tetracarbonsäuren genannt. Als Monoanhydrid wird das Trimellitsäure-Derivat 1,2,4-Benzoltricarbonsäureanhydrid und 1,2,3-Benzoltricarbonsäureanhydrid bevorzugt, sowie auch die Naphthalintricarbonsäure-Derivate 1,2,6-, 2,3,6- und 1,4,5-Naphthalintricarbonsäureanhydrid.

Als Dianhydride werden bevorzugt die käuflichen Verbindungen Benzol-1,2,4,5-tetracarbonsäuredianhydrid (Pyromellitsäuredianhydrid) und Naphthalin-1,4,5,8-tetracarbonsäuredianhydrid bzw. das Naphthalin-2,3,6,7-tetracarbonsäuredianhydrid, welches sich einfach durch Dehydratisierung aus der bekannten Naphthalin-2,3,6,7-tetracarbonsäure bildet, eingesetzt.

Die Molmassen erfindungsgemäßer Kondensate liegen zwischen 300 und 10000 Dalton, bevorzugt zwischen 500 und 7500, besonders bevorzugt zwischen 1000 und 5000 und können mit den dem Fachmann bekannten Methoden der Dampfdruckosmose, HPLC, SFC (Supercritical Fluid Cromatography) bestimmt werden.

Für die Herstellung von erfindungsgemäßen Kondensationsprodukten aus Tricarbonsäureanhydriden kann es günstig sein, nicht die Tricarbonsäuremonoanhydride selbst, sondern die entsprechenden Monoanhydridchloride der Formel (IIa) einzusetzen. 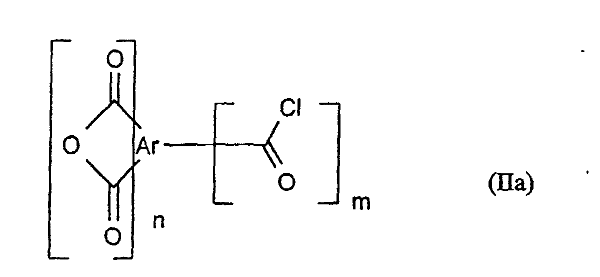 in der Ar die oben angegebene Bedeutung besitzt und n und m gleich 1 sind.

Als Monoanhydridchloride werden bevorzugt das käufliche Trimellitsäure-Derivat 1,2,4-Benzoltricarbonsäureanhydridchlorid und 1,2,3-Benzoltricarbonsäureanhydridchlorid verwendet bzw. die Naphthalintricarbonsäure-Derivate 1,2,6-, 2,3,6- und 1,4,5-Naphthalintricarbonsäureanhydridchloride. So lassen sich die erfindungsgemäßen Kondensationsprodukte durch Umsetzung von aromatischen Anhydridchloriden oder Dianhydriden mit Hydroxyalkyl(meth)acrylaten erhalten.

Bei der Herstellung der erfindungsgemäßen Kondensationsprodukte aus Monoanhydridchloriden der Formel (IIa) können zusätzlich anorganische oder organische Basen als Säurefänger verwendet werden.

Bevorzugte anorganische Basen sind die schwach basischen Carbonate und Hydrogencarbonate des Natrium und Kaliums. Bevorzugte organische Basen sind tert. Amine, wobei Triethylamin und Pyridin insbesondere bevorzugt sind. Die Basen werden bezüglich des eingesetzten Anhydrides, bzw Anhydridchlorides der Formel (II) in einer 0,05 bis fünffach molaren Menge eingesetzt, wobei ein 2- bis 3-facher molarer Überschuß bevorzugt ist. Die organischen Basen wirken auf diese Weise zusätzlich lösungsvermittelnd.

Wie dem Fachmann bekannt ist, können zur Herstellung erfindungsgemäßer oligomerer Kondensationsprodukte die Monomere der Formeln (I) und (IIa) sowohl in unterschiedlichen wie auch in äquimolaren stöchiometrischen Verhältnissen eingesetzt werden, die dann entsprechend zu terminalen Anhydriden oder Hydroxiden führen. So führt beispielsweise ein Verhältnis von Monomer 1 zu 1,2,4-Benzoltricarbonsäureanhydridchlorid von größer als 1 bis maximal 2 zu einem Kondensat mit terminalen Anhydridgruppen, Formel (III), die danach zu Carboxygruppen verseift werden können, während ein Verhältnis dieser Monomere von kleiner als 1 bis minimal 0,5 zu einem Kondensat mit terminalen Hydroxygruppen führt, Formel (IV).

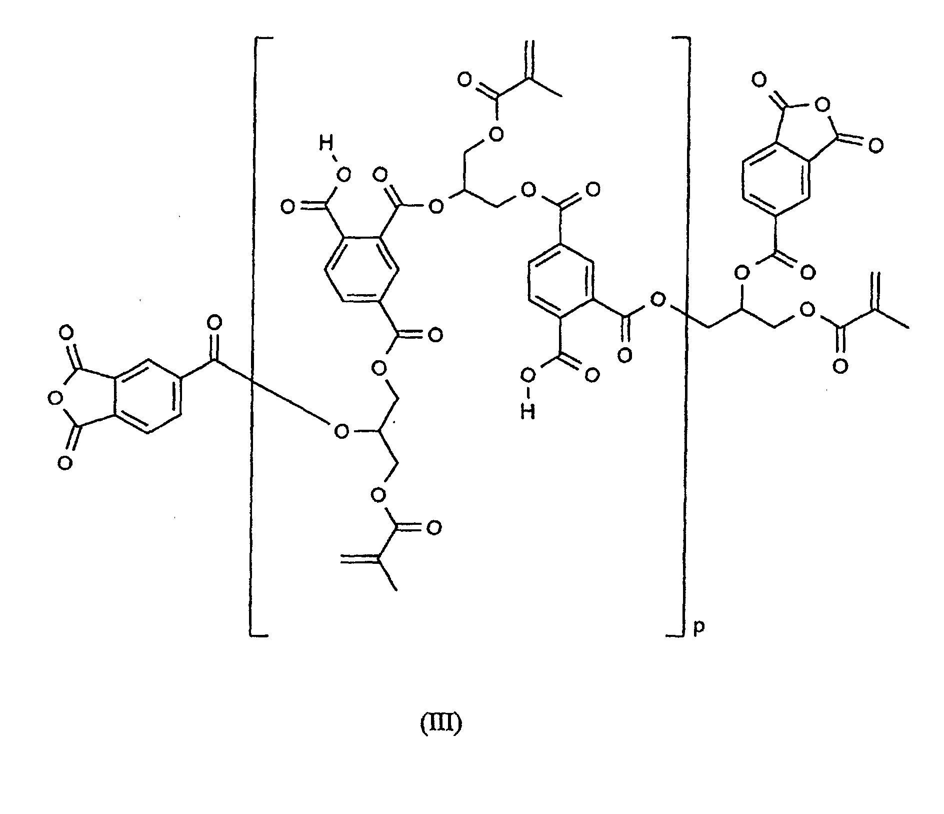

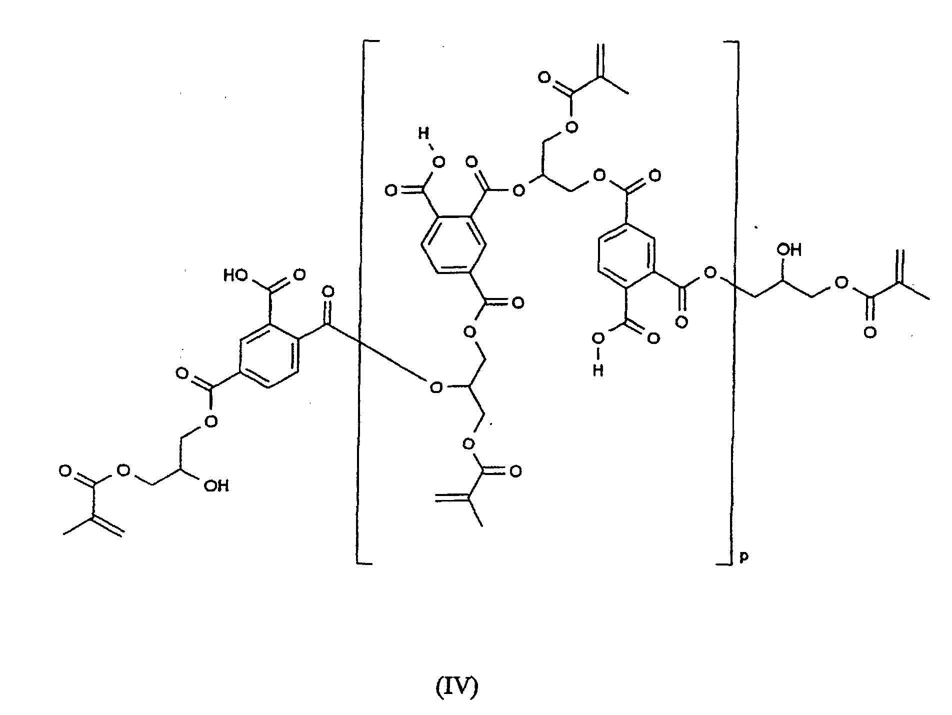

Die Wiederholungseinheit p wird durch die Molmasse bestimmt und liegt bei erfindungsgemäßen Kondensationsprodukten zwischen 1 und 14.

Bei genau äquimolaren Verhältnissen kommt es zur Ausbildung von Hydroxy- und Anhydridgruppen, wobei die Kondensation und Molmasse durch Verseifung des Anhydrids während der Reaktion beispielsweise durch Wasserzusatz kontrolliert werden kann.

Die den erfindungsgemäßen oligomeren Kondensationsprodukten zugrundeliegenden Hydroxyalkyl(meth)acrylate nach Formel (I) sind zum Teil handelsüblich oder können in bekannter Weise durch Veresterung von Polyhydroxyalkylverbindungen mit z.B. (Meth)acrylsäurechlorid hergestellt werden.

Anstelle der Monomere 1 und 2 aus Tabelle 1 können auch die davon abgeleiteten Epoxide 1a und 2a in vorteilhafter Weise zur Herstellung der erfindungsgemäßen Kondensationsprodukte eingesetzt werden.

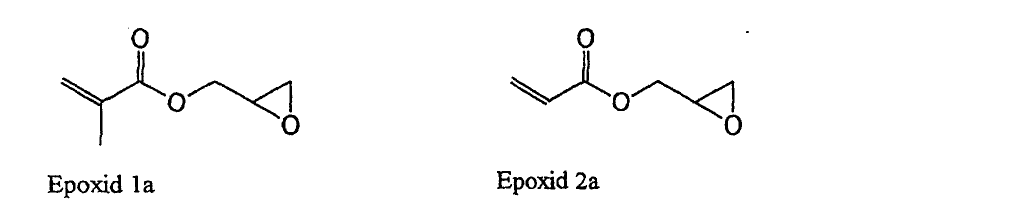

Nach einem bevorzugten Syntheseweg der vorliegenden Erfindung werden die Tricarbonsäuremonoanhydride mit den Epoxiden 1a oder 2a umgesetzt. Bei diesem Syntheseweg ist es besonders vorteilhaft, wenn die Umsetzung mit einem Katalysator beschleunigt wird. Hierzu sind sowohl Lewis- als auch Protonensäuren geeignet. Im folgenden seien als Katalysator genannt: Perchlorsäure, Schwefelsäure, Trifluormethansulfonsäure. Aluminiumoxid, Bortrifluorid, Triphenylstibin, Triphenylphosphin. Letzterer ist besonders bevorzugt.

Die Katalysatoren für die erfindungsgemäße Herstellung oligomerer Kondensationsprodukte können von 1 ppm bis hin zu equimolaren Mengen, bezogen auf die Monomere der Formeln (I) oder (II), verwendet werden, je nach Wirksamkeit unter den bestimmten Reaktionsbedingungen. Bevorzugt wird eine Katalysatormenge von 1000 ppm bis 10 %, bezogen auf die Monomere der Formeln (I) oder (II), besonders bevorzugt von 1000 ppm bis 1 % eingesetzt.

Es ist zweckmäßig, die der Umsetzung entstammende Reaktionswärme sowie die sich aufbauende Viskosität durch ein inertes Lösemittel zu kontrollieren. So erfolgt die Herstellung der erfindungsgemäßen Kondensationsprodukte vorzugsweise in einem organischen Lösungsmittel. Geeignete organische Lösungsmittel sind aprotische Lösungsmittel wie Dioxan, Tetrahydrofuran, N,N-Dimethylformamid, N,N-Dimethylacetamid, Dimethylsulfonamid, Butanon und Aceton. Bevorzugt geeignet sind Toluol und Diethylether. Besonders bevorzugt sind Xylol, Methylenchlorid, Chloroform, Butanon und Methyl-tert.butylether.

Ein geeigneter Temperaturbereich zur Herstellung der erfindungsgemäßen Oligomere liegt zwischen -30 und 110°C. Bevorzugt wird diese Reaktion zwischen -10 und 50° C und besonders bevorzugt zwischen -5 und 30°C durchgeführt.

Bei der Herstellung der erfindungsgemäßen Oligomere werden zunächst die entsprechenden terminalen Hydroxide oder Anhydride gebildet. Aus den Anhydriden sind durch Hydrolyse Dicarbonsäuren zugänglich. Die Hydrolyse erfolgt bei Temperaturen zwischen 0 und 100°C, bevorzugt zwischen 20 und 50°C. Die Hydrolyse kann sowohl nach Isolierung der Anhydride erfolgen, oder auch ohne Isolierung durch direkte Hydrolyse des Reaktionsansatzes. Zur Durchführung dieser Hydrolyse wird Wasser in äquimolarer, bevorzugt jedoch in über zehnfach molarer Menge zugegeben. Die Hydrolyse kann durch gezielte Zugabe von Säuren, vor allem Schwefelsäure, Phosphorsäure, Toluolsulfonsäure oder sauren Ionenaustauschern, bzw. durch Zugabe von Basen wie Natrium- und Kalium-Hydroxid, -Carbonat oder - Hydrogencarbonat katalysiert werden.

Die Reaktionsfähigkeit von durch Polymerisation härtbaren Verbindungen kann sehr gut mit der Photo-DSC (Differential Scanning Calorimetry) charakterisiert werden. Bei dieser Methode werden photoaktivierte Proben in einer DSC-Apperatur (Differential Scanning Calorimetry) mit einer intensiven Strahlungsquelle, z.B. einer Halogenlampe mit Wärmeschutzfilter bestrahlt. Der Wärmefluß wird unter Bestrahlung als Funktion der Zeit registriert. Als Referenz werden Proben gleicher Zusammensetzung ohne Photoinitiator eingesetzt. Für die Auswertung kann als Maß für die Reaktionsgeschwindigkeit der Wert t-max ermittelt ermittelt werden. t-max ist die Zeit von Bestrahlungsbeginn bis zum Erreichen des Maximum der Reaktion (maximaler Wärmefluß). Je kleiner t-max ist, um so größer ist die Photoreaktivität.

Die erfindungsgemäßen härtbaren Beschichtungen enthalten neben den Kondensationsprodukten aus aromatischen Tri- oder Tetracarbonsäuren und Dihydroxyalkyl(meth)acrylaten Initiatoren und gegebenenfalls Coaktivatoren und weitere (Meth)acrylsäureester als Comonomere. Insbesondere können auch Gemische verschiedener Kondensationsprodukte in den erfindungsgemäßen Beschichtungen eingesetzt werden.

Initiatoren im Rahmen der vorliegenden Erfindung sind Radikalbildner, die eine radikalische Polymerisation auslösen. Geeignet sind thermische Initiatoren und Fotoinitiatoren, die unter der Einwirkung von Licht, beispielsweise UV-Licht, sichtbarem Licht oder Laserlicht, eine radikalische Polymerisation auslösen.

Als thermische Initiatoren seien beispielhaft genannt: Peroxyde, wie Benzoylperoxyd, Perester wie tert.-Butylperpivalat, Percarbonate, wie Cyclohexylpercarbonat und Azoverbindungen, wie Azoisobuttersäuredinitril.

Die sogenannten Fotopolymerisationsinitiatoren sind aus der Literatur bekannt. Vorzugsweise handelt es sich um Mono- oder Dicarbonylverbindungen, wie Benzoin und dessen Derivate, insbesondere Benzoinmethylether, Benzil und Benzilderivate, beispielsweise 4,4-Oxidibenzil und andere Dicarbonylverbindungen wie Diacetyl, 2,3-Pentandion und α-Diketoderivate des Norbornans und substituierter Norbornane, Metallcarbonyle wie Penta-carbonylmangan oder Chinone wie 9,10-Phenanthrenchinon und Naphthochinon.

Die erfindungsgemäßen Beschichtungen enthalten im allgemeinen 0,01 bis 2 Gew.-Teile, bevorzugt 0,1 bis 0,5 Gew.-Teile des Initiators, bezogen auf 1 Gew.-Teil des Kondensationsproduktes.

Es kann vorteilhaft sein, den erfindungsgemäßen Beschichtungen Coaktivatoren zuzusetzen, die die Polymerisationsreaktion beschleunigen. Bekannte Beschleuniger sind beispielsweise Amine wie p-Toluidin, Dimethyl-p-toluidin, Trialkylamine wie Trihexylamin, Polyamine wie N,N,N',N'-Tetraalkylalkylendiamin, Barbitursäure und Dialkylbarbitursäure.

Die Coaktivatoren werden im allgemeinen in einer Menge von 0,02 bis 4 Gew.-%, bevorzugt 0,2 bis 1 Gew.-%, bezogen auf die Menge an polymerisierbaren Verbindungen, eingesetzt.

Als weitere Komponenten für die erfindungsgemäßen Beschichtungen kommen (Meth)-acrylsäureester als Comonomere in Frage. Bevorzugt seien Ester der (Meth)-acrylsäure mit 1- bis 5-wertigen Alkoholen mit 2 bis 30 Kohlenstoffatomen genannt. Gut geeignet sind auch multifunktionelle (Meth)acrylate wie z.B. Etylenglycoldi(meth)acylat, Glycerindi(meth)acrylat, Glycerintri(meth)acrylat, Hexandioldi(meth)-acrylat, Neopentylglycoldi(meth)acrylat und Trimethylolpropantri(meth)acrylat. Gut geeignet sind auch Epoxid(meth)acrylate, Urethan(meth)acrylate und Umsetzungsprodukte aus Polyolen, Diisocyanaten und Hydroxyalkyl(meth)acrylaten (DE-A 3 703 120, DE-A 3 703 080 und DE-A 3 703 130) .

Mischungen der verschiedenen (Meth)(Meth)-acrylsäureester können ebenfalls eingesetzt werden.

Die härtbaren Beschichtungen gemäß dieser Erfindung können weiterhin bis zu 10 Gew.-Teilen üblicher Zusätze wie Stabilisatoren, Inhibitoren oder Lichtschutzmittel enthalten.

Das Auftragen der Beschichtungen kann mit bekannten Techniken, beispielsweise durch Streichen, Spritzen, Sprühen, Spin-Coaten oder Tauchen, erfolgen. Es ist natürlich möglich, die Verarbeitungsviskosität durch Zusatz der oben angegebenen Comonomeren oder durch Verdünnen mit einem inerten Lösungsmittel einzustellen. Als inertes Lösungsmittel eigen sich beispielsweise chlorierte Aliphaten, Essigester, Aceton, Butanon, Toluol, Xylol und Methylenchlorid.

Die Beschichtungen eignen sich für zahlreiche Substrate, insbesondere für Kunststoffe. Als Beispiele für Kunststoffe seien Polycarbonat und dessen Mischungen ("Blends") mit anderen Polymeren, wie beispielsweise Polystyrol, HIPS und ABS (Acrylnitril-Butadien-Styrol-Copolymerisat) genannt.

Es wurde gefunden, daß auch dotiertes Polycarbonat, das z.B. in Fotoleitertrommeln als Ladungstransportschicht eingesetzt wird, in vorteilhafter Weise mit den erfindungsgemäßen oligomeren Kondensationsprodukten aus aromatischen Tri- oder Tetracarbonsäuren und Dihydroxyalkyl(meth)acrylaten beschichtet werden kann.

Die Dicke der erfindungsgemäßen Beschichtungen ist nicht kritisch. Sie kann im Bereich von 0,1µm bis 500 µm, vorzugsweise 2 bis 100 µm liegen.

Die erfindungsgemäßen Beschichtungen sind nach Härtung optisch transparent und zeigen im Vergleich zu herkömmlichen Acrylatbeschichtungen eine verbesserte Wiederstandsfähigkeit gegenüber thermischer, mechanischer oder chemischer Belastung. Sie zeigen eine exzellente Haftfestigkeit auf der Kunststoffoberfläche. Die hohe Haftfestigkeit bleibt insbesondere auch dann erhalten, wenn der beschichtete Kunststoff mit Lösemitteln in Kontakt kommt.

Wegen ihrer guten Haftung sind die erfindungsgemäßen Beschichtungen auch in hervorragender Weise als verbindende Zwischenschichten (Primer) geeignet. So läßt sich beispielsweise die Haftfestigkeit von überwiegend anorganischen Kratzfestbeschichtungen, die z.B. in DE-A1-19603242 oder DE-A1-4338361 ("Ormocere") beschrieben werden, durch Anbringen einer Zwischenschicht aus den erfindungsgemäßen oligomeren Kondensationsprodukten aus aromatischen Tri- oder Tetracarbonsäuren und Dihydroxyalkyl(meth)acrylaten entscheident verbessern.

### Beispiele

### Beispiel 1:

### Herstellung von Kondensationsprodukt 1

Zu einer Lösung aus 210.57 g (1.000 mol) 1,2,4-Benzoltricarbonsäureanhydridchlorid in 650 ml trockenem Butanon und 202,38 g (2.000 mol) trockenem Triethylamin wird bei -5°C unter Rühren eine Lösung von 160,2 g (1.000 mol) Glycerinmonomethacrylat (Monomer 1 aus Tabelle 1, Polyscience, Inc.) in 250ml trockenem Butanon getropft. Nach sechzehnstündigem Rühren bei Raumtemperatur wird der ausgefallene helle Feststoff abgesaugt, das Filtrat wäßrig extrahiert und getrocknet.

Die erhaltene Butanon-Lösung enthält das gewünschte Produkt (1) und kann direkt zur Hydrolyse der verbliebenen Anhydridgruppen eingesetzt werden. Dazu wird die Lösung mit 50 ml demineralisiertem Wasser versetzt und über einen Zeitraum von 16 h bei Raumtemperatur gerührt.

Nach Zusatz von 200 mg 2,6-Di-tert.butylkresol läßt sich die erhaltene Lösung zu 327,7 g (87 % d. Th.) eines gelblichen viskosen Öls einengen.
IR: ν = 3400, 3200, 2900, 2600, 2400, 1720, 1640, 1500, 1440, 1420, 1380, 1295, 1240, 1175, 1125, 1075, 1020, 950, 865, 825, 760 cm⁻¹.
¹H-NMR (CDCl₃, 200 MHz): δ = 8,55 - 7,8 (3H); 6,2 und 5,6 (je 1H); 5,8 (1H); 4,9 - 4,2 (4H); 1,9 (3H) ppm.
Molmasse (HPLC): 1100 Dalton

### Beispiel 2:

### Herstellung von Kondensationsprodukt 2

Eine Mischung aus 218,12 g (1 mol) Pyromellitsäuredianhydrid, 222,2 g (2,2 mol) Triethylamin und 2200 ml Butanon wird bei Raumtemperatur unter Rühren mit einer Lösung aus 160,2 g (1 mol) Glycerinmonomethacrylat in 250 ml Butanon versetzt und 3 h auf 50 °C erhitzt. Der Rohansatz wird filtriert, das Filtrat in Eiswasser gegossen, zur Hydrolyse mit halbkonzetrierter Schwefelsäure angesäuert und 30 min verrührt. Die beiden Phasen werden getrennt, die organische Phase nochmals mit Wasser gewaschen und über Natriumsulfat getrocknet.
IR: υ = 3400, 2900, 2600, 2400, 1720, 1640, 1500, 1420, 1380, 1295, 1250, 1175, 1110, 1020, 950, 825, 770 cm⁻¹.
¹H-NMR (Aceton-d₆, 200 MHz): δ = 8,35 - 8,0 (2H); 6,1 und 5,6 (je 1H); 5,8 (1H); 4,7 - 4,2 (5H); 1,9 (3H) ppm.

### Beispiel 3:

### Herstellung von Kondensationsprodukt 3

Eine Mischung aus 268,18 g (1 mol) Naphthalin-1,4,5,8-tetracarbonsäuredianhydrid, 222,2 g (2,2 mol) Triethylamin und 2200 ml Butanon wird bei Raumtemperatur unter Rühren mit einer Lösung aus 160.2 g (1 mol) Glycerinmonomethacrylat in 250 ml Butanon versetzt und 3 h auf 50 °C erhitzt. Der Rohansatz wird filtriert, das Filtrat in Eiswasser gegossen, zur Hydrolyse mit halbkonzetrierter Schwefelsäure angesäuert und 30 min verrührt. Die beiden Phasen werden getrennt, die organische Phase nochmals mit Wasser gewaschen und über Natriumsulfat getrocknet.
IR: ν = 3300, 3050, 2900, 2650, 2500, 1775, 1710, 1630, 1595, 1560, 1540, 1515, 1465, 1440, 1380, 1330, 1300, 1225, 1160, 1125, 1100, 1040, 950, 880, 820, 765, 700 cm⁻¹.

### Beispiel 4:

### Herstellung von Kondensationsprodukt 4

Zu einer Lösung aus 7,88 g 1,2,4-Benzoltricarbonsäureanhydrid in 30 ml trockenem Butanon werden 10 mg 2,6-Di-tert.butylkresol, 0,1 g Triphenylphosphin und 5,83 g Glycidylmethacrylat zugegeben. Nach 24 h Rühren bei 70 °C wird die Rohlösung wäßrig - sauer extrahiert und getrocknet.

Die erhaltene Butanon-Lösung enthält das gewünschte Produkt (1) und wird zu 12,19 g (89 % d. Th.) eines leicht gelblichen, viskosen Öls einengt.
¹H-NMR (CDCl₃, 200 MHz): δ = 8,55 - 7,8 (3H); 6,2 und 5,6 (je 1H); 4,9 - 4,2 (5H); 1,9 (3H) ppm.
Molmasse (HPLC): 1500 Dalton

### Beispiel 5:

### Herstellung von Kondensationsprodukt 5

Die unter Beispiel 4 beschriebene Reaktion wird wiederholt, wobei statt 5,83 g Glycidylmethacrylat 5,26 g Glycidylacrylat verwendet wird.

Die erhaltene Butanon-Lösung enthält das gewünschte Produkt (5) und wird zu 9,46 g (72 % d. Th.) eines gelblichen viskosen Öls einengt.
¹H-NMR (Aceton-d₆, 200 MHz): δ = 8,55 - 7,8 (3H); 6,6 - 5,8 (3 H); 5 - 4,2 (5H) ppm.

### Beispiel 6:

### Überprüfung der Photoreaktivität mit Hilfe der Photo-DSC (Differential Scanning Calorimetty)

Die folgenden Bestandteile werden intensiv durchmischt:

### Beispiel 6a (erfindungungsgemäß):

| | |
|---|---|
| 5.0 g | Produkt gemäß Beispiel 1 |
| 10 mg | Campherchinon (Fotoinitiator) |
| 25 mg | p-Dimethylaminobenzolsulfonsäure-N,N-diallylamid (Coaktivator) |

### Beispiel 6b (Vergleich):

| | |
|---|---|
| 5.0 g | Trimethylolpropantriacrylat (Vergleich: übliches kommerzielles Lackacrylat) |
| 10 mg | Campherchinon |
| 25 mg | p-Dimethylaminobenzolsulfonsäure-N,N-diallylamid |

Die Proben werden bei 30°C in einer DSC-Apperatur (Differential Scanning Calorimetry) mit einer Halogenlampe (75 W) mit Wärmeschutzfilter bestrahlt. Der Wärmefluß wird unter Bestrahlung als Funktion der Zeit registriert. Als Referenz werden Proben gleicher Zusammensetzung ohne Photoinitiator eingesetzt. Während des Versuchs wird mit Stickstoff gespült. Für die Auswertung wird als Maß für die Reaktionsgeschwindigkeit der Wert t-max ermittelt. t-max ist die Zeit von Bestrahlungsbeginn bis zum Erreichen des Maximum der Reaktion (maximaler Wärmefluß). Je kleiner t-max ist, um so größer ist die Photoreaktivität.

| | t-max [min] |
|---|---|
| Beispiel 6a (erfindungsgemäß) | 0,38 |
| Beispiel 6b (Vergleich) | 2,0 |

Der Vergleich macht deutlich, daß die Photoreaktivität der erfindungsgemäßen oligomere Kondensationsprodukten aus aromatischen Tri- oder Tetracarbonsäuren und Dihydroxyalkyl(meth)acrylaten deutlich größer ist als die Photoreaktivität üblicher für Beschichtungen eingesetzter Acrylate ist.

### Beispiel 7:

### Beschichtung von Polycarbonat

Eine Beschichtungslösung wird unter Lichtausschluß durch intensives Vermischen der folgenden Bestandteile erzeugt:
- 2,5 g: Butanon
- 2,5 g: Produkt gemäß Beispiel 4
- 0.01 g: Campherchinon
- 0.025 g: p-Dimetylaminobenzolsulfonsäure-N,N-diallylamid (Coaktivator)

Mit Hilfe einer Rakel wird die Beschichtungslösung mit einer Naßfilmdicke von 20 um auf eine Polycarbonatunterlage (Macrolon) aufgetragen. Der Film wird 30 min bei 40°C getrocknet, und anschließend mit einer Halogenstrahlungsquelle (100 Watt) 60 s lang belichtet. Man erhält eine transparente Beschichtung mit guter Haftung (Gitterschnittest: 0/0).

### Beispiel 8:

### Beschichtung von Polycarbonat

Eine Beschichtungslösung wird durch intensives Vermischen der folgenden Bestandteile erzeugt:
- 2,5 g: Butanon
- 2,5 g: Produkt gemäß Beispiel 4
- 0.025 g: Dibenzoylperoxid

Mit Hilfe einer Rakel wird die Beschichtungslösung mit einer Naßfilmdicke von 20 µm auf eine Polycarbonatunterlage (Macrolon) aufgetragen. Der Film wird 30 min bei 40°C getrocknet, und anschließend in einem Trockenschrank 15 min lang bei 100°C ausgehärtet. Man erhält eine transparente Beschichtung mit guter Haftung (Gitterschnittest: 0/0).

### Beispiel 9:

Beschichtung von ABS (Acrylnitril-Butadien-Styrol-Copolymerisat).

Eine Beschichtungslösung wird unter Lichtausschluß durch intensives Vermischen der folgenden Bestandteile erzeugt:
- 1,5 g: Butanon
- 0,5 g: Produkt gemäß Beispiel 1
- 0.5 g: Trimethylolpropantriacylat
- 1,4 mg: Benzildimetylketal

Mit Hilfe einer Rakel wird die Beschichtungslösung mit einer Naßfilmdicke von 100 µm auf eine ABS-Unterlage aufgetragen . Der Film wird 30 min bei 40 °C getrocknet, und anschließend mit einer UV-Strahlungsquelle 120 s lang belichtet. Man erhält eine transparente Beschichtung mit guter Haftung (Gitterschnittest: 0/0). Zur Überprüfung der Alkoholfestigkeit wurde die beschichtete Unterlage 24 h in Ethanol getaucht. Es trat keine Beeinträchtigung der Haftfestigkeit (Gitterschnittest: 0/0) und mechanischen Eigenschaften auf.

## Patentansprüche

1. Härtbare Beschichtungen enthaltend oligomere Kondensationsprodukte aus mehrwertigen Hydroxyalkyl(meth)acrylaten der Formel (I) 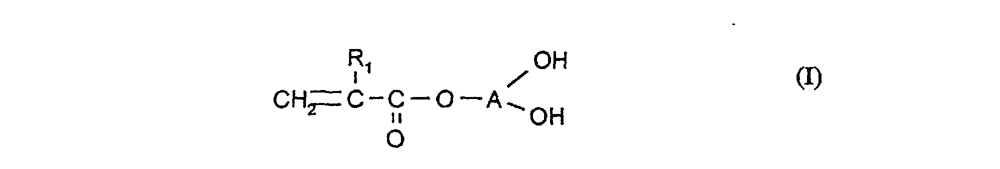 in der
R₁ Wasserstoff oder Methyl bedeutet,
A ein dreibindiger aliphatischer Rest mit 3 bis 15 C-Atomen, der (zusätzliche) OH - Gruppen und bis zu 5 Etherbrücken enthalten kann, bedeutet,
und aromatischen Tri-oder Tetracarbonsäurederivaten der Formel (II) 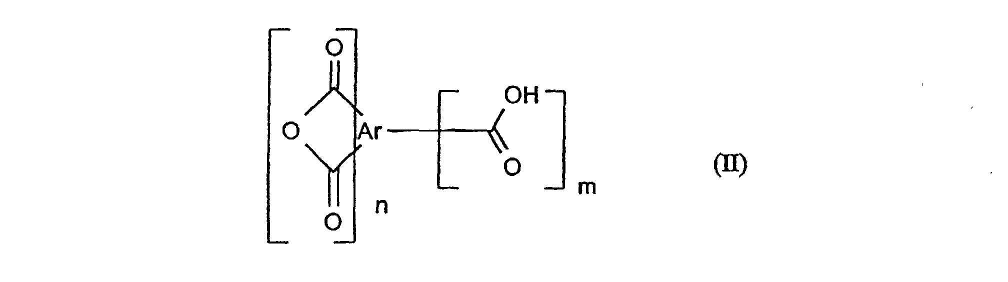 in der
Ar für einen Benzolring oder einen Naphthalinring steht,
n eine ganze Zahl von 1 oder 2 bedeutet,
m 1 oder 2 bedeutet.

2. Härtbare Beschichtungen gemäß Anspruch 1, wobei der Rest A ausgewählt ist aus den folgenden Verbindungen

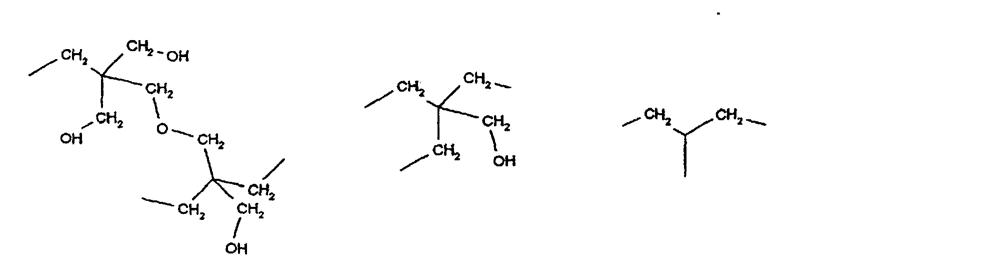

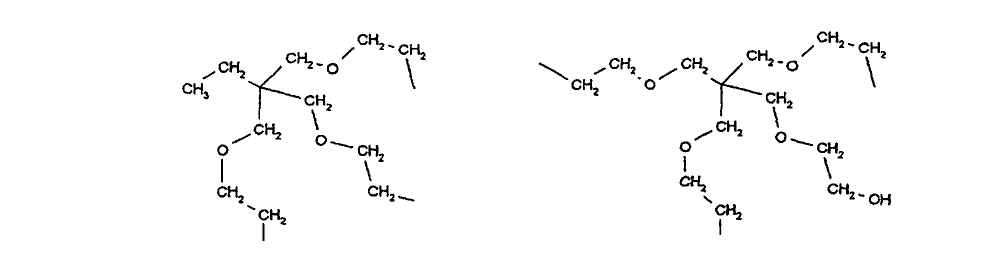

3. Härtbare Beschichtungen gemäß Anspruch 1, wobei die Monomere der Formel (I) ausgewählt sind aus den folgenden Verbindungen:

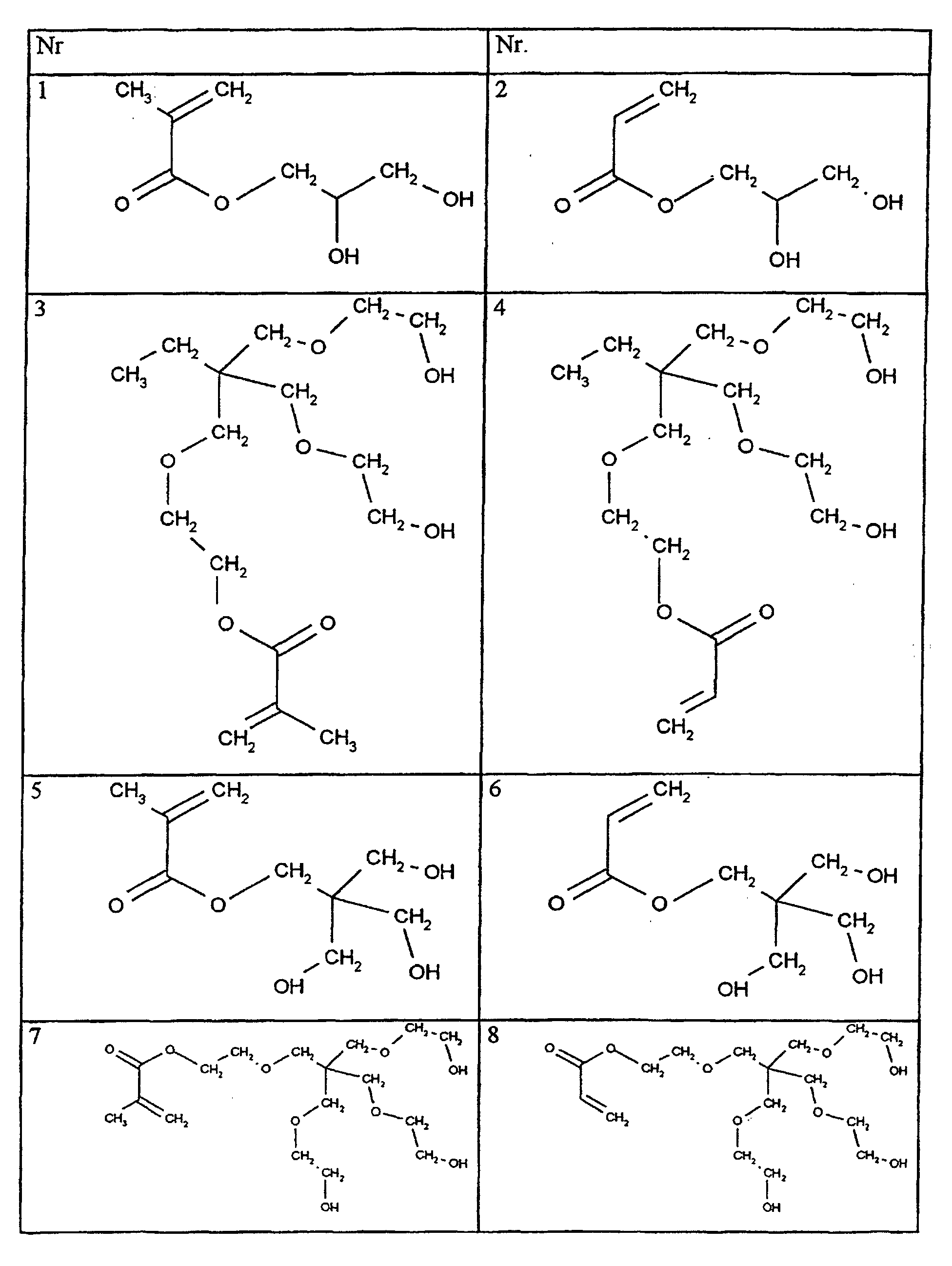

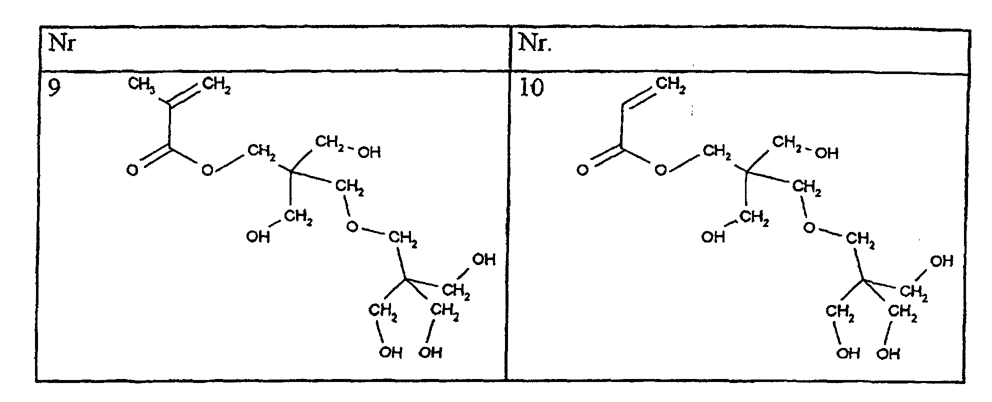

4. Härtbare Beschichtungen gemäß Anspruch 1, wobei die Monomere der Formel (II) ausgewählt sind aus 1,2,4-Benzoltricarbonsäureanhydrid, 1,2,3-Benzoltricarbonsäureanhydrid, 1,2,6-, 2,3,6- und/oder 1,4,5-Naphthalincarbonsäureanhydrid, Benzol-1,2,4,5-tetracarbonsäure dianhydrid, Naphthalin-1,4,5,8-tetracarbonsäuredianhydrid bzw. Naphthalin-2,3,6,7-tetracarbonsäuredianhydrid.

5. Härtbare Beschichtungen gemäß Anspruch 1 bis 4, wobei die oligomeren Kondensationsprodukte eine Molmasse von 300 bis 10000 Dalton besitzen.

6. Härtbare Beschichtungen gemäß Anspruch 1 bis 5, wobei als Initiator ein Radikalbildner aus der Reihe der Mono- oder Dicarbonylverbindungen eingesetzt wird.

7. Verwendung von härtbaren Beschichtungen gemäß Anspruch 1 bis 6, zur Beschichtung von Kunststoffen.

8. Verwendung von härtbaren Beschichtungen gemäß Anspruch 1 bis 6, zur Beschichtung von ABS und/oder Polycarbonat.

9. Verwendung von härtbaren Beschichtungen gemäß Anspruch 1 bis 6, als Primer für anorganische oder anorganisch/organische Beschichtungen.

## Claims

1. Curable coatings comprising oligomeric condensation products of polyfunctional hydroxyalkyl (meth)acrylates of the formula (I) 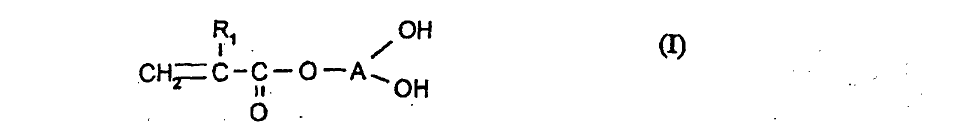 in which
R₁ denotes hydrogen or methyl,
A denotes a trivalent aliphatic radical having 3 to 15 C atoms, which can contain (additional) OH groups and up to 5 ether bridges,
and aromatic tri- or tetracarboxylic acid derivatives of the formula (II) 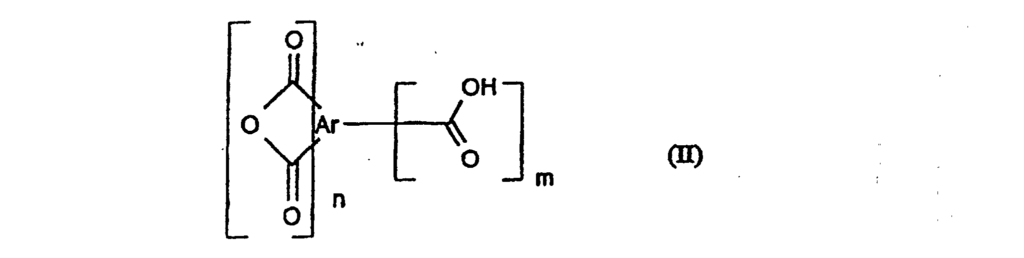 in which
Ar represents a benzene ring or a naphthalene ring,
n denotes the integer 1 or 2,
m denotes 1 or 2.

2. Curable coatings according to claim 1, wherein the radical A is chosen from the following compounds

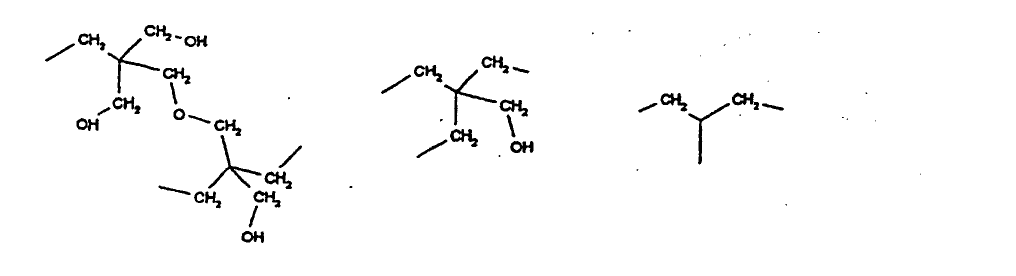

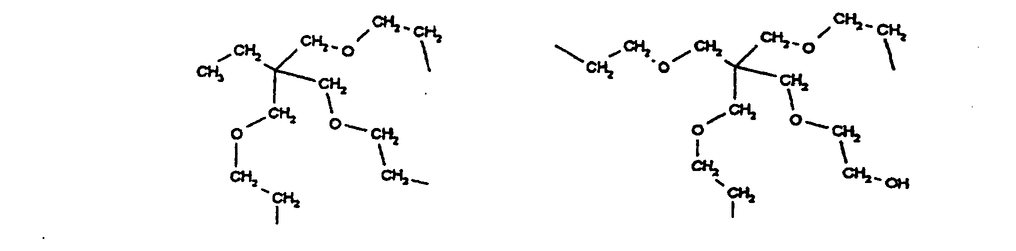

3. Curable coatings according to claim 1, wherein the monomers of the formula (I) are chosen from the following compounds:

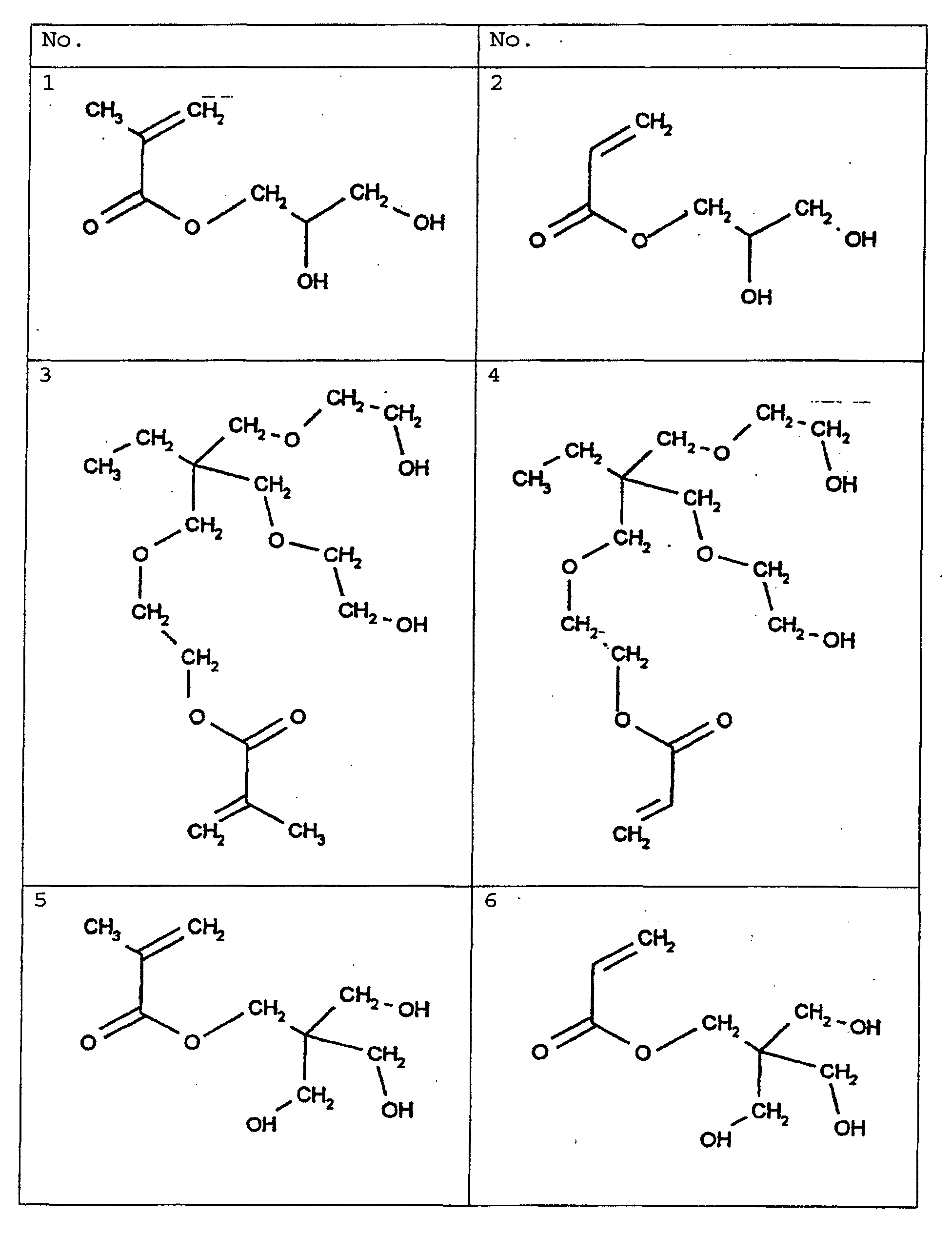

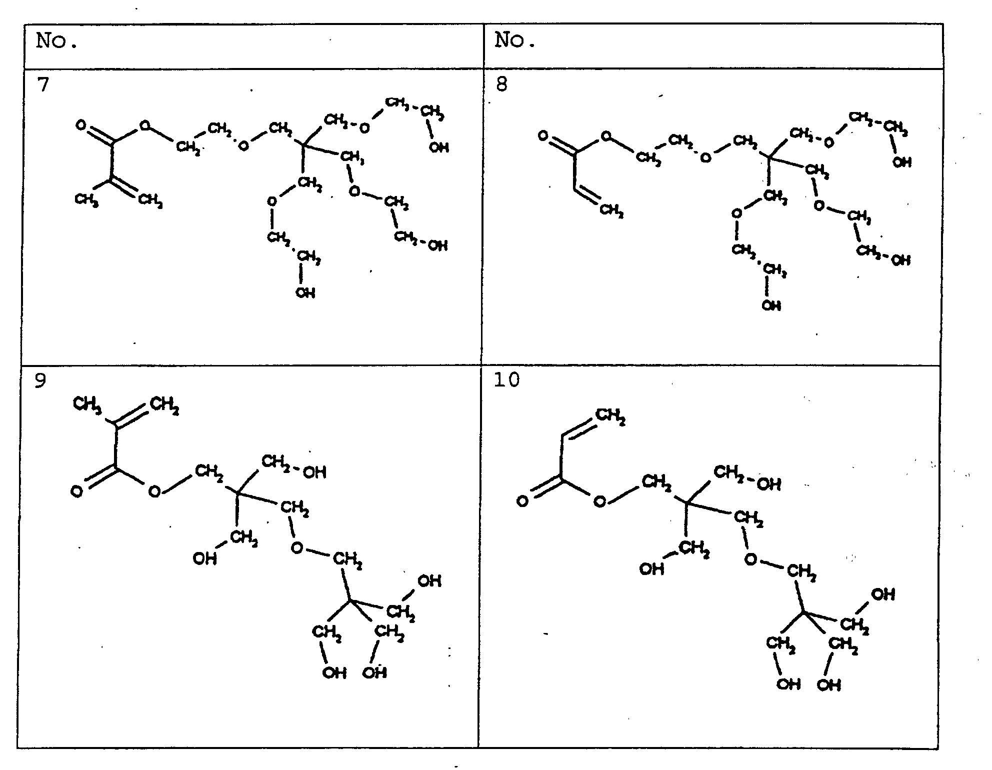

4. Curable coatings according to claim 1, wherein the monomers of the formula (II) are chosen from 1,2,4-benzenetricarboxylic acid anhydride, 1,2,3-benzenetricarboxylic acid anhydride, 1,2,6-, 2,3,6-and/or 1,4,5-naphthalenecarboxylic acid anhydride, benzene-1,2,4,5-tetracarboxylic acid dianhydride, naphthalene-1,4,5,8-tetracarboxylic acid dianhydride and naphthalene-2,3,6,7-tetracarboxylic acid dianhydride.

5. Curable coatings according to claims 1 to 4, wherein the oligomeric condensation products have a molecular weight of 300 to 10,000 daltons.

6. Curable coatings according to claims 1 to 5, wherein an agent which forms free radicals from the series consisting of mono- or dicarbonyl compounds is employed as the initiator.

7. Use of curable coatings according to claims 1 to 6 for coating plastics.

8. Use of curable coatings according to claims 1 to 6 for coating ABS and/or polycarbonate.

9. Use of curable coatings according to claims 1 to 6 as a primer for inorganic or inorganic/organic coatings.

## Revendications

1. Revêtements durcissables contenant des produits de condensation oligomères de (méth)actytates d'hydroxyalkyles polyvalents de formule (I) 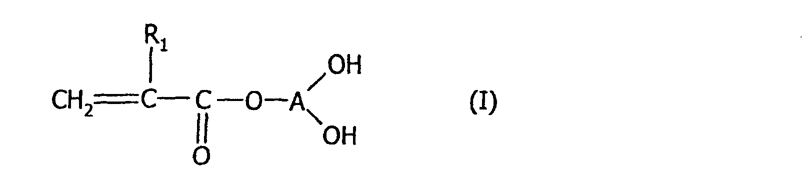 dans laquelle
R₁ représente l'hydrogène ou un groupe méthyle
A représente un radical aliphatique trivalent en C₃ à C₁₅ qui peut en outre contenir des groupes OH et jusqu'à 5 ponts éther,
et de dérivés d'acides aromatiques tri- ou tétra-carboxyliques de formule (II) 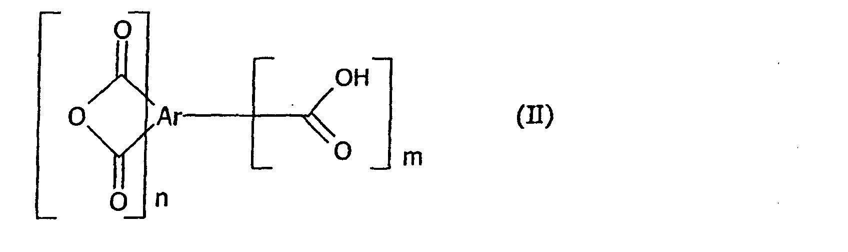 dans laquelle
Ar représente un cycle benzénique ou un cycle naphtalénique,
n est un nombre entier de 1 ou 2,
m est égal à 1 ou 2.

2. Revêtements durcissables selon la revendication 1, pour lesquels le symbole A représente l'un des groupes suivants

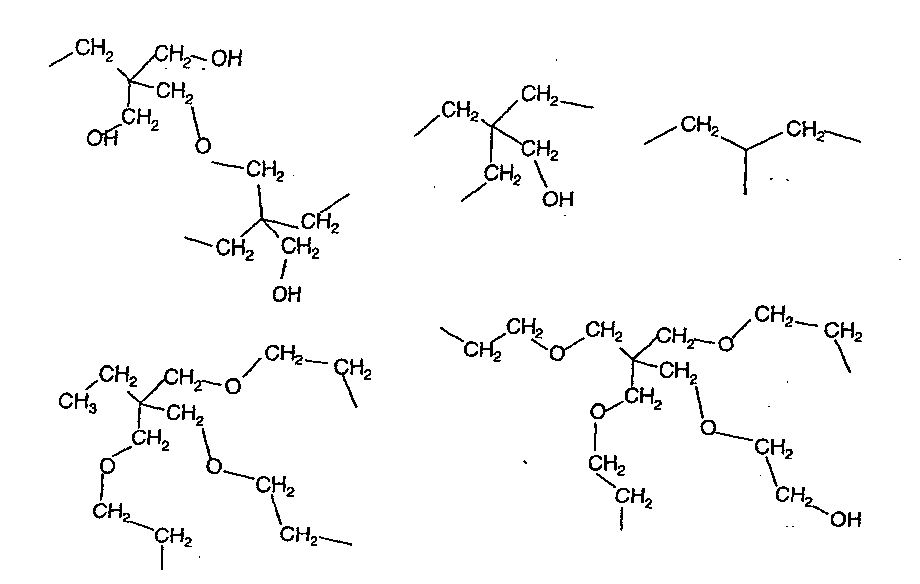

3. Revêtements durcissables selon la revendication 1, pour lesquels les monomères de formule 1 sont choisis parmi les composés suivants :

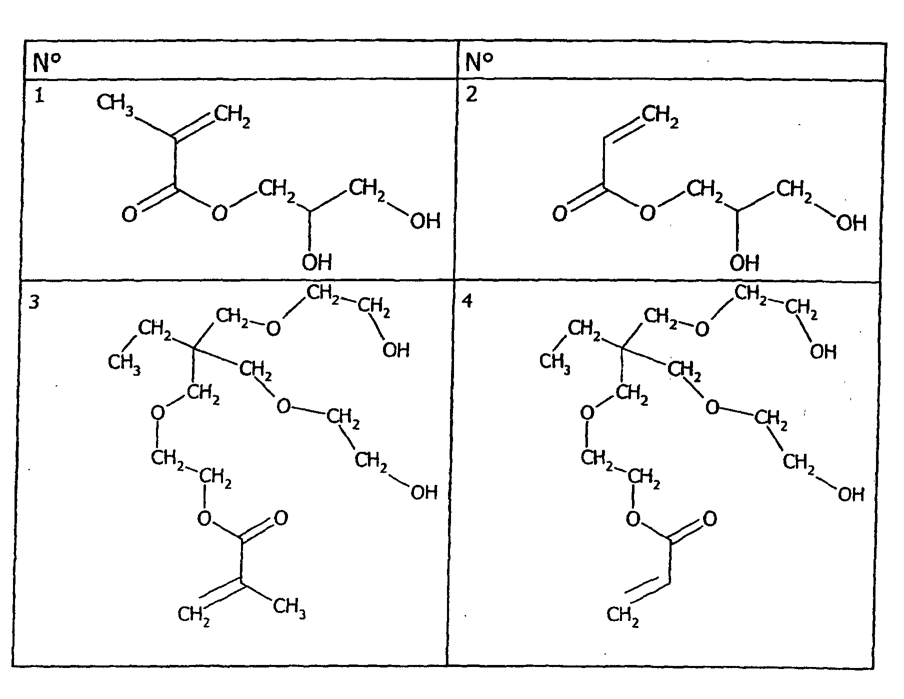

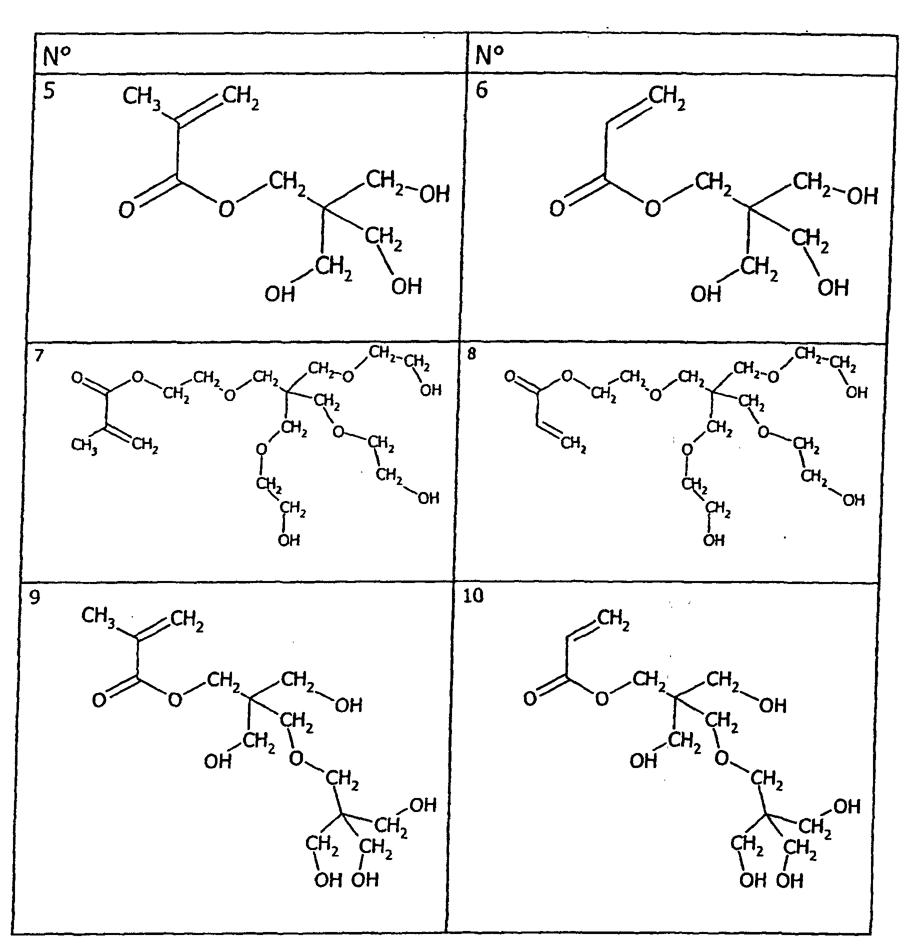

4. Revêtements durcissables selon la revendication 1, pour lesquels les monomères de formule (II) sont choisis parmi l'anhydride de l'acide 1,2,4-benzènetricarboxyiique, l'anhydride de l'acide 1,2,3-benzènetricarbo-xylique, les anhydrides des acides 1,2,6-, 2,3,6- et/ou 1,4,5-naphtalène-carboxyliques, le dianhydride de l'acide benzène-1,2,4,5-tétra-carboxylique, le dianhydride de l'acide naphtalène-1,4,5,8-tétracarboxylique et le dianhydride de l'acide naphtalène-2,3,6,7-tétracarboxylique.

5. Revêtements durcissables selon les revendications 1 à 4, pour lesquels les produits de condensation oligomères ont une masse moléculaire de 300 à 10 000 g/mol.

6. Revêtements durcissables selon les revendications 1 à 5, pour lesquels on utilise en tant qu'inducteur un composé formant des radicaux fibres choisi parmi les dérivés mono- ou di-carbonylés.

7. Utilisation des revêtements durcissables selon les revendications 1 à 6 pour le revêtement de résines synthétiques.

8. Utilisation de revêtements durcissables selon les revendications 1 à 6 pour le revêtement de la résine ABS et/ou des polycarbonates.

9. Utilisation des revêtements durcissables selon les revendications 1 à 6 en tant que sous-couche ("primer") pour des revêtements minéraux ou minéraux/organiques.
